# EUROPEAN PATENT APPLICATION

(11) **EP 1 402 937 A1**
(43) Date of publication of application: **31.03.2004**
(21) Application number: 02743672.4
(22) Date of filing: 20.06.2002
(51) Int. Cl.: B01D 53/50

(54) **SO3 SEPARATING AND REMOVING EQUIPMENT FOR FLUE GAS**

(30) Priority: 21.06.2001 JP 2001188405
(71) Applicant: Mitsubishi Heavy Industries, Ltd., Tokyo (JP); ASAHI GLASS COMPANY LTD., Tokyo 100-8405 (JP)
(72) Inventor: KATO, Masaya, C/O KOBE Shipyard & Machinery Works, Kobe-shi, Hyogo 652-8585 (JP); KATAYAMA, Hiroyuki, C/O TAKASAGO Res & Dev Cter, Takasago-shi (JP); YATA, Katsutoshi, C/O Mitsubishi Heavy Ind. Envir., Minato-ku, Tokyo 108-0014 (JP); HIRANO, Hachiro, C/O Asahi Glass Company, Ltd., Chiyoda-ku, Tokyo 100-8405 (JP); MORI, Yoichi, C/O Asahi Glass Company, Ltd., Kitakyushu-shi, Fukuoka 804-8520 (JP); YAMAMOTO, Katsuyoshi, C/O Asahi Glass Company, Ltd, Ichihara-shi, Chiba 290-8566 (JP)
(74) Representative: HOFFMANN - EITLE
(86) International application number: PCT/JP2002/006185
(87) International publication number: WO 2003/000387

(57) **Abstract**

A sodium carbonate supply device is provided that supplies sodium carbonate to flue gas at the outlet of a boiler 1, and an SO₃ separation device 10 is provided that decreases the SO₃ concentration in the flue gas while also separating and removing SO₃ fraction from the flue gas at the inlet of a wet desulfurization device 7. The SO₃ separation device is provided with a shell and tube type of heat exchanger that cools flue gas to below the dew point of H₂SO₄ gas by allowing flue gas to pass through the shell side and allowing boiler supply water to pass through the tube side. The SO₃ component present in the flue gas is lowered in temperature and reacts with moisture in the flue gas to form H₂SO₄ gas, after which the H₂SO₄ gas condenses and adheres to the surface of the tubes. By then washing the liquid H₂SO₄ adhered to the tube surfaces with water, the SO₃ component can be removed from the flue gas. As a result, the amount of sodium carbonate consumed is reduced considerably, and an increase in plant operating cost is prevented.

## Description

### BACKGROUND OF THE INVENTION

### Technical Field

The present invention relates to a flue gas SO₃ fraction removal device and, more particularly, to an SO₃ fraction removal device that removes the sulfur trioxide (SO₃) fraction present in flue gas from furnaces using fuel containing sulfur.

### Background Art

In the case of furnaces such as boilers that use heavy oil and other fuels that contain sulfur, sulfur dioxide (SO₂) is formed in the flue gas due to combustion of sulfur in the fuel. Consequently, in furnaces using heavy oil, the flue gas is treated by a desulfurization device prior to being released into the atmosphere to remove the SO₂.

However, a portion of the SO₂ in the flue gas is converted to sulfur trioxide (SO₃) due to additional oxidation within the boiler and denitration device. The temperature of the flue gas decreases as a result of passing through an air preheater and so forth, and when it reaches a temperature below about 300°C, for example, SO₃ in the flue gas reacts with moisture in the flue gas and forms H₂SO₄ gas by following the reaction of SO₃ + H₂O → H₂SO₄. This H₂SO₄ gas forms a fine sulfuric acid mist when the temperature of the flue gas falls below the dew point of sulfuric acid.

In the case of using a desulfurization device and, particularly, a wet desulfurization device, although all of the H₂SO₄ present in the flue gas becomes a sulfuric acid mist due to the temperature of the flue gas falling below the dew point temperature of sulfuric acid when it passes through the desulfurization device, due to the low removal rate of sulfuric acid mist in wet desulfurization devices, however, flue gas at the outlet of the desulfurization device contains a comparatively large amount of sulfuric acid mist from heavy oil-burning boilers and so forth. When this sulfuric acid mist is discharged into the atmosphere, in addition to forming blue smoke, it also causes environmental contamination in the form of acid rain.

Wet electrostatic precipitators (to be abbreviated as wet EPs) are typically used to remove the sulfuric acid mist present in flue gas. Wet EPs form a water film on the precipitating electrodes of the electrostatic precipitator by spraying water or alkaline solution onto those electrodes, followed by washing and removing captured sulfuric acid mist from the electrodes.

In addition, devices have also been proposed that prevent the formation of sulfuric acid mist by adding an SO₃ neutralizer to the flue gas without using a wet EP.

An example of this type of device is described in Japanese Unexamined Patent Publication No. 2000-317260. In the device of this publication, SO₃ in flue gas is removed by adding an SO₃ neutralizer in the form of an alkaline powder such as calcium carbonate to the flue gas at a location where the temperature of the flue gas is high on the upstream side of the desulfurization device. Namely, since calcium carbonate (CaCO₃) added to the flue gas forms CaSO₄ by reacting with SO₃ or H₂SO₄ in the flue gas, there is no formation of H₂SO₄ mist even if the temperature of the flue gas subsequently lowers. In addition, as the CaSO₄ formed by reaction of calcium carbonate and SO₃ is not corrosive, it can be easily captured with an ordinary electrostatic precipitator without using a wet EP. As a result, the device described in this publication prevents the release of sulfuric acid mist into the atmosphere without using a wet EP.

However, in the case of boilers and so forth, the amount of SO₃ present in flue gas fluctuates considerably due to variations in the load, the sulfur concentration in the fuel used, the degree of boiler contamination and so forth. In the case of removing sulfuric acid mist using a wet EP, it is necessary to set the maximum treatment capacity (capturing capacity) of the wet EP to a large enough value that allows ample margin with ' respect to the maximum amount of SO₃ generated in consideration of various conditions. In addition, as wet EPs normally require a large installation area, increasing the treatment capacity of a wet EP leads to considerable increases in device costs and construction costs, thereby resulting in the problem of increased costs for the entire boiler plant.

In addition, as in the device described in the previously mentioned Japanese Unexamined Patent Publication No. 2000-317260, in the case of a method consisting of adding alkaline powder or other SO₃ neutralizer on the upstream side of the desulfurization device, although there is no resulting increase in construction costs accompanying increased treatment capacity of the wet EP, a precipitator is ultimately required to remove the particles of CaSO₄ and so forth following SO₃ neutralization. Moreover, in the case of the device described in the above publication, as it is necessary to constantly add neutralizer to the flue gas while the plant is operating, the amount of expensive neutralizer becomes large, thereby resulting in the problem of increased plant operating costs.

### DISCLOSURE OF THE INVENTION

In consideration of the above problems, an object of the present invention is to provide a flue gas SO₃ fraction removal device capable of suppressing increases in plant operating costs without causing an increase in the plant construction costs attributable to installation of a wet EP.

In order to achieve the above object, according to the present invention, there is provided a flue gas SO₃ fraction removal device comprising: a flue gas passage that leads flue gas to a stack from a furnace in which fuel containing a sulfur fraction is burned, a wet desulfurization device arranged in the flue gas passage that removes sulfur dioxide (SO₂) present in the flue gas, a sodium carbonate supply device that supplies sodium carbonate (Na₂CO₃) to the flue gas passage on the upstream side of the desulfurization device, and an SO₃ separation device arranged on the upstream side of the wet desulfurization device and on the downstream side of the portion of the flue gas passage to which the sodium carbonate is supplied, that condenses the SO₃ fraction present in the flue gas in the form of liquid H₂SO₄ by cooling the flue gas to separate and remove it from the flue gas.

According to the present invention, as a result of supplying sodium carbonate to flue gas on the upstream side of a wet desulfurization device without using a wet EP, the SO₃ fraction in the flue gas (in the following explanation, gaseous SO₃ and H₂SO₄ as well as H₂SO₄ mist are generically referred to as the SO₃ fraction) is converted to Na₂SO₄. As will be described later, as Na₂SO₄ has a particle size that allows it to be easily removed with a wet desulfurization device, it can be removed by the wet desulfurization device. In order to convert the entire amount of SO₃ in the flue gas to Na₂SO₄, it is necessary to continuously supply a relatively large amount of sodium carbonate to the flue gas during operation, thus resulting in the problem of increased plant operating costs due to the increased amount of sodium carbonate consumed.

Therefore, in the present invention, the amount of sodium carbonate is reduced to a degree that allows removal of only a portion of the SO₃ in the flue gas without removing the entire amount of SO₃ present in the flue gas. The remaining SO₃ that was not removed by supplying sodium carbonate is then removed from the flue gas by providing a separate SO₃ separation device. The SO₃ separation device of the present invention separates and removes the SO₃ fraction from the flue gas by cooling the flue gas.

As was previously mentioned, when the temperature of the flue gas decreases below a certain level (for example, 300°C), the SO₃ fraction in the flue gas reacts with moisture in the flue gas to form H₂SO₄. As the temperature of the flue gas lowers further and falls below the dew point of the H₂SO₄ gas, this H₂SO₄ gas condenses into liquid H₂SO₄. In the present invention, SO₃ present in the flue gas is condensed to liquid H₂SO₄ by forcibly cooling flue gas containing SO₃ followed by separation of that liquid H₂SO₄ from the flue gas. As a result, SO₃ in the flue gas can be removed in the form of liquid H₂SO₄ with an SO₃ separation device, thereby causing a decrease in the SO₃ fraction in the flue gas at the inlet of the wet desulfurization device.

Consequently, the amount of sodium carbonate supplied to the flue gas is reduced, and plant operating costs can be decreased.

Furthermore, as the SO₃ separation device of the present invention removes the SO₃ fraction from flue gas by cooling the flue gas, it functions as a heat recovery device that recovers heat from the flue gas. Thus, if heat recovered with the SO₃ separation device is reused (in order to, for example, heat water supplied to the boiler), plant operating costs can be further reduced.

Furthermore, the sodium carbonate supply device may be made to supply sodium hydrogen carbonate (NaHCO₃) powder to the flue gas and use that which forms fine particles of sodium carbonate within the flue gas. Sodium hydrogen carbonate powder supplied to the flue gas undergoes a decomposition reaction in the manner of 2NaHCO₃ → Na₂CO₃ + CO₂ + H₂O caused by the heat of the flue gas, resulting in the formation of sodium carbonate (Na₂CO₃) in the flue gas. These Na₂CO₃ particles have high porosity due to the portions vacated by the CO₂ and H₂O forming holes, and demonstrate a porous structure having a large specific surface area. Consequently, the formed Na₂CO₃ particles react efficiently with the SO₃ fraction in the flue gas, enabling the SO₃ fraction to be efficiently converted to Na₂SO₄.

In addition, a heat exchanger that lowers the temperature of the flue gas using cooling water may be used for the above SO₃ separation device. By lowering the temperature of the flue gas using a heat exchanger, condensation of H₂SO₄ occurs on the heat conducting surface in contact with the flue gas, and the formed liquid H₂SO₄ adheres to the heat conducting surface. Liquid H₂SO₄ adhering to the heat conducting surface can be easily removed by washing the heat conducting surface during operation using washing water. In this manner, by lowering the temperature of the flue gas using a heat exchanger, the SO₃ fraction in the flue gas can be removed in the form of aqueous H₂SO₄ solution both easily and inexpensively.

Moreover, in the case of using a heat exchanger for the above SO₃ separation device, the washing water containing H₂SO₄ following washing of the heat conducting surface of the heat exchanger is preferably used as replenishing water by being supplied to the absorbent circulation device of the wet desulfurization device. SO₂ in the flue gas is absorbed into the absorbent by spraying an aqueous solution of SO₂ absorbent into the flue gas in the absorption tower of the wet desulfurization device and, as the flue gas is saturated with water vapor, a considerable amount of water is taken away from the absorption tower together with the flue gas in this step. Therefore, it is necessary to constantly replenish the circulation device with water. Thus, the consumption of replenishing water can be reduced by supplying water used to wash the heat conducting surface to the absorbent circulation device. In addition, as the H₂SO₄ contained in the washing water is neutralized by reacting with the SO₂ absorbent, this offers the advantage of not requiring a separate water treatment device for treating the washing water.

In addition, the heat exchanger used in the SO₃ separation device is preferably a shell and tube type heat exchanger having a simple constitution. Moreover, if the casing inner surface that contacts the flue gas and the tube outer surface that acts as a heat conducting surface are composed of a corrosion-resistant material having chemical resistance such as stainless steel, or covered with a corrosion-resistant material having chemical resistance such as polytetrafluoroethylene (PTFA) or copolymer of tetrafluoroethylen and perfluoro (alkyl vinyl ether) (PFA), corrosion of the tube outer surfaces and casing inner surfaces by H₂SO₄ is prevented, thereby improving device reliability.

Moreover, in the above wet desulfurization device, it is also possible to provide a cooling tower that lowers the temperature of the flue gas by spraying water into the flue gas before it flows into the absorption tower, as well as arrange the above SO₃ separation device at the flue gas inlet section of the upper section of the cooling tower, and allow the above washing device to supply wastewater following washing of the above heat conducting surface to a cooling tower, and supply it as replenishing water to the absorbent circulation device of the absorption tower together with the water sprayed into the cooling tower.

Within the cooling tower, flue gas flows into the tower from the flue gas inlet of the upper section of the cooling tower, and the temperature lowers as a result of evaporation of water sprayed into the flue gas while it flows downward through the tower. At this time, as a considerable amount of the sprayed water evaporates and is carried away from the cooling tower along with flue gas, it is necessary to replenish the cooling tower with an amount of water equal to the water that has evaporated. Consequently, by providing the SO₃ separation device in the flue gas inlet of the upper section of the cooling tower, the temperature of flue gas that flows into the cooling tower lowers, and the amount of water that evaporates inside the cooling tower is reduced. In addition, as the SO₃ separation device is arranged in the upper section of the cooling tower, water following washing of the heat conducting surface drops into the cooling tower by gravity, and replenishes the SO₂ absorbent circulation device of the absorption tower via the lower section of the cooling tower together with the sprayed water. Consequently, there is no need to provide a separate transfer pump and so forth for supplying washing water to the absorbent circulation device.

In addition, water supplied to the boiler can be used as cooling water for the above heat exchanger so as to recover the heat of the flue gas in the water supplied to the boiler.

As a result, as the heat taken from the flue gas for separating SO₃ can be used to preheat the water supplied to the boiler, in addition to reducing the amount of Na₂CO₃ consumed by the sodium carbonate supply device, the amount of fuel consumed by the boiler furnace is also significantly reduced, thereby reducing the operating costs of the entire plant.

Moreover, a gas/gas heater can be arranged in the flue gas passage on the upstream side of the above SO₃ separation device that allows exchange of heat between flue gas supplied to the stack and flue gas discharged from the furnace, and the sodium carbonate supply device can be made to supply Na₂CO₃ to the flue gas passage on the downstream side of an air preheater.

By enabling exchange of heat between flue gas at the outlet of the wet desulfurization device and flue gas discharged from the furnace using a gas heater, the temperature of flue gas discharged from the stack can be raised to prevent generation of white smoke.

In addition, in the case of supplying sodium hydrogen carbonate (NaHCO₃) powder to the flue gas and forming Na₂CO₃ having a porous structure in the flue gas, supplying the NaHCO₃ powder to a location where the temperature of the flue gas is high results in better formation of Na₂CO₃ having a porous structure. In addition, as Na₂CO₃ reacts with gaseous SO₃ and H₂SO₄ in the flue gas, supplying the Na₂CO₃ at a location where the temperature of the flue gas is as high as possible and where there is little H₂SO₄ mist is preferable in terms of removing the SO₃ fraction. Consequently, in the case of providing a gas/gas heater, by supplying sodium hydrogen carbonate from the sodium carbonate supply device to the flue gas passage on the downstream side of the air preheater, in addition to satisfactory formation of Na₂CO₃ having a porous structure, the SO₃ fraction in the flue gas is efficiently removed by the Na₂CO₃.

Moreover, a flue gas SO₃ fraction removal device can be composed by additionally installing the previously mentioned SO₃ separation device and sodium carbonate supply device in the flue gas passage on the upstream side of an existing wet desulfurization device.

As the above SO₃ separation device and sodium carbonate supply device can be applied to any type of wet desulfurization device, by fabricating an SO₃ separation device by using an existing wet desulfurization device in this manner, an SO₃ fraction removal device can be fabricated extremely inexpensively.

Furthermore, equipment arranged in the flue gas passage between the above-mentioned sodium carbonate supply device and the above-mentioned wet desulfurization device are preferably composed only of equipment not having moving parts at locations in contact with the flue gas.

Namely, since sodium carbonate and the SO₃ fraction are highly reactive, a portion of the NaHSO₃ formed by this reaction further reacts with the SO₃ fraction in the flue gas and forms NaHSO₄ (acidic sodium sulfate). As this NaHSO₄ is extremely hygroscopic, if equipment having moving parts such as a blower or damper are present, it adheres to those moving parts and may result in sticking and other problems. Consequently, it is preferable to not arrange equipment having moving parts such as a blower or damper at locations in contact with flue gas in the flue gas passage between the sodium carbonate supply device and desulfurization device to prevent the occurrence of sticking and other problems.

In addition, a sodium carbonate removal device that removes sodium carbonate after reacting with the SO₃ fraction in the flue gas may be provided between the above sodium carbonate supply device and the above wet desulfurization device, and equipment arranged in the flue gas passage between the sodium carbonate supply device and sodium carbonate removal device may be made to be composed only of equipment not having moving parts at locations in contact with the flue gas.

Namely, by providing a sodium carbonate removal device that removes the reaction product of sodium carbonate and the SO₃ fraction from the flue gas, as highly hygroscopic NaHSO₄ is removed from the flue gas after passing through the removal device, sticking and other problems affecting moving parts of equipment in the flue gas passage are prevented. In addition, in this case as well, equipment having moving parts such as blowers and dampers should not be arranged in the flue gas passage between the sodium carbonate supply device and sodium carbonate removal device in order to prevent sticking and other problems.

### BRIEF DESCRIPTION OF THE DRAWINGS

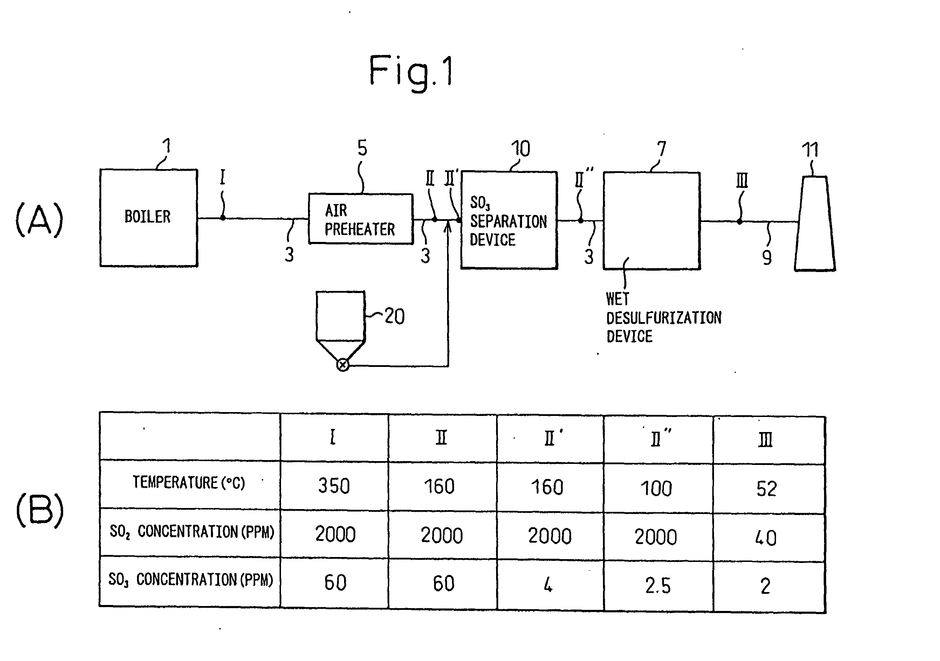

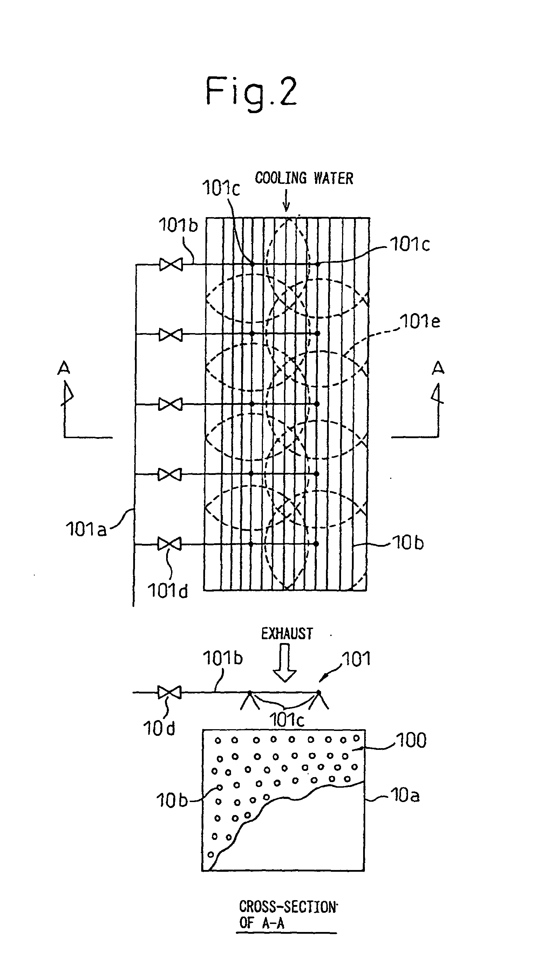

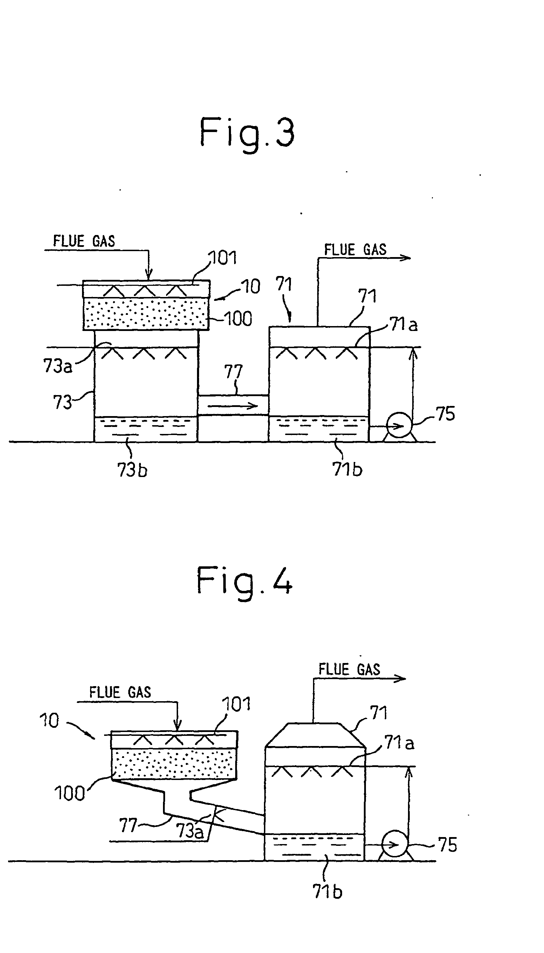

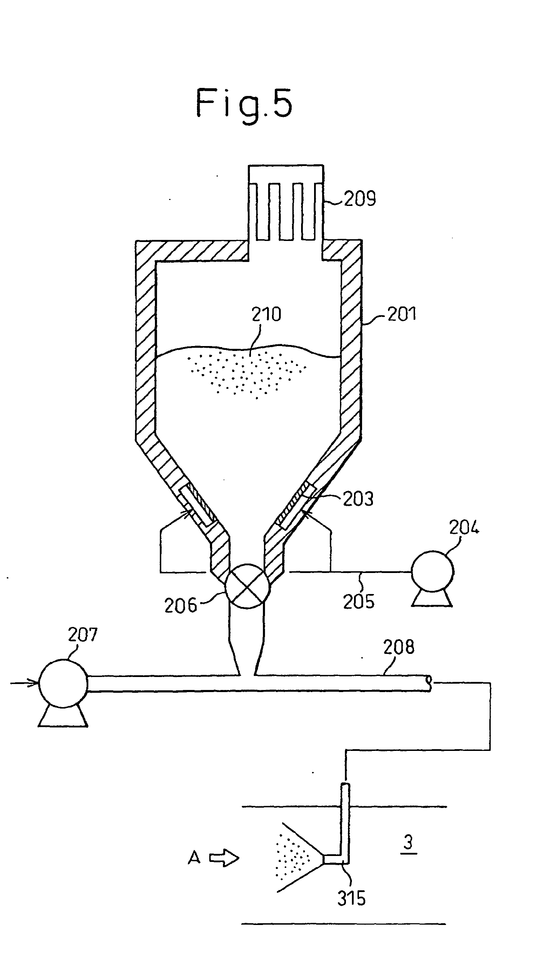

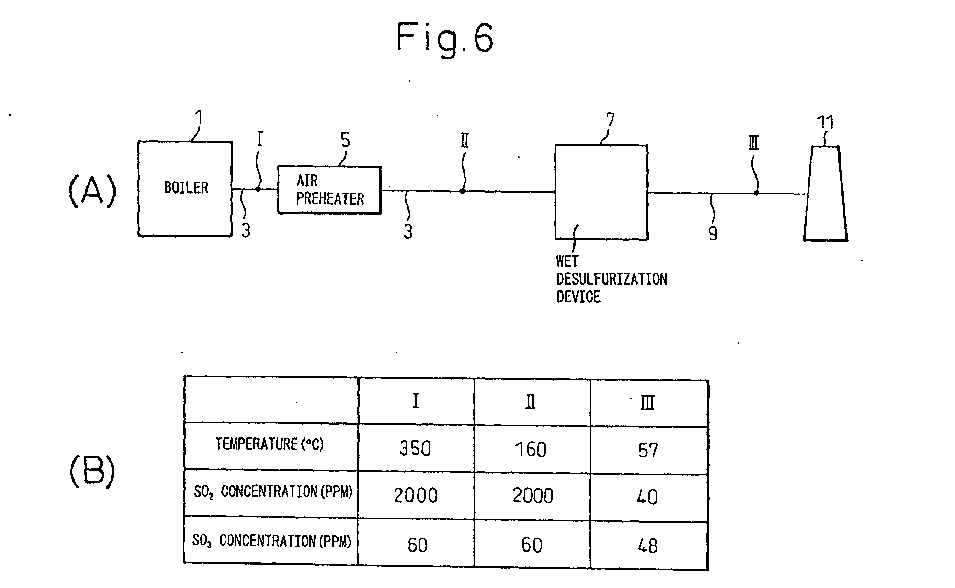

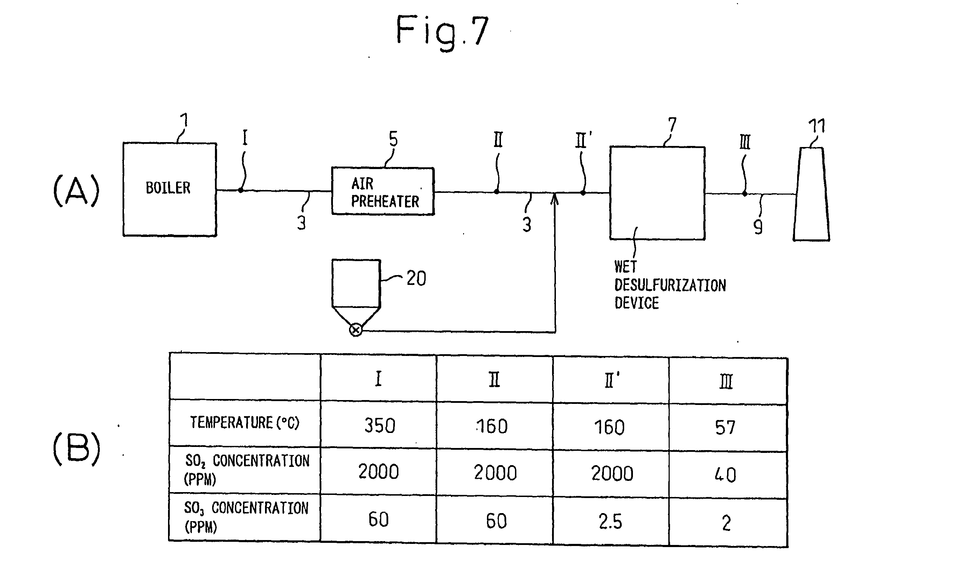

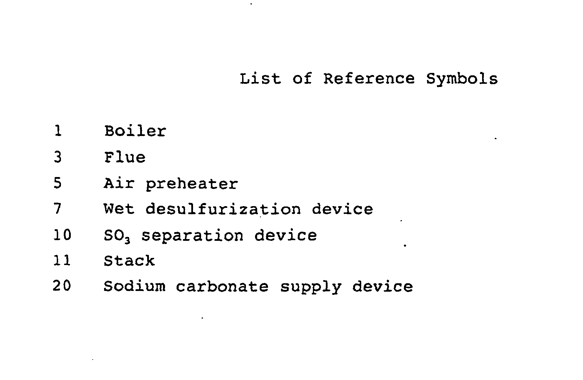

Fig. 1(A) is a drawing schematically showing the entire constitution of one embodiment of the SO₃ fraction removal device of the present invention. Fig. 1(B) is a drawing explaining the SO₃ concentration in flue gas in each section of Fig. 1(A). Fig. 2 is a drawing explaining the constitution of one embodiment of an SO₃ separation device used in the SO₃ fraction removal device of Figs. 1(A) and 1(B). Fig. 3 is a drawing showing an example of the configuration of an SO₃ fraction removal device. Fig. 4 is a drawing showing another example of the configuration of an SO₃ fraction removal device. Fig. 5 is a drawing explaining the constitution of one embodiment of a sodium carbonate supply device used in the SO₃ fraction removal device of Fig. 1. Fig. 6(A) is a drawing showing the device configuration in the case of performing flue gas treatment using only a wet desulfurization apparatus. Fig. 6(B) is a drawing explaining the SO₃ concentration in flue gas in each section of Fig. 6(A). Fig. 7(A) is a drawing showing the device configuration in the case of performing flue gas treatment using only a wet desulfurization device. Fig. 7(B) is a drawing explaining the SO₃ concentration in flue gas in each section of Fig. 7(A).

### BEST MODE FOR CARRYING OUT THE INVENTION

Although the following provides an explanation of embodiments of the present invention, an explanation is first provided of the case of flue gas treatment using only a wet desulfurization device without providing the SO₃ fraction removal device of the present invention or a sodium carbonate supply device.

Fig. 6(A) is a drawing providing a schematic explanation of the device configuration in the case of performing flue gas treatment using only a wet desulfurization device.

In Fig. 6(A), reference symbol 1 indicates a furnace such as a boiler, reference symbol 3 indicates a flue through which flows the combustion flue gas of boiler 1, and reference symbol 7 indicates a wet desulfurization device that removes SO₂ present in the flue gas. An ordinary known type of wet desulfurization device (such as that which removes SO₂ in flue gas in the form of CaSO₄ by contacting an aqueous solution of an SO₂ absorbent such as calcium hydroxide or calcium carbonate with the flue gas, or that which removes SO₂ present in flue gas in the form of MgSO₄ or Na₂SO₄ by using magnesium hydroxide or sodium hydroxide) is used for desulfurization device 7. Flue gas from which SO₂ has been removed with desulfurization device 7 is released into the atmosphere from stack 11 after passing through downstream flue 9.

After combustion gas (flue gas) generated by combustion of heavy oil in boiler 1 passes through an air preheater (air heater) 5 provided in flue 3 and exchanges heat with combustion air supplied to boiler 1, it is aspirated by a desulfurization fan (not shown) and supplied to desulfurization device 7 by flowing through flue 3.

If inexpensive heavy oil that contains a relatively high sulfur fraction (e.g., 2% or more) is used for fuel, a large amount of SO₂ is formed due to oxidation of the sulfur, and a portion of that is further oxidized to SO₃. When the temperature of the flue gas is lowered as a result of, for example, passing through air preheater 5, a portion of the SO₃ reacts with moisture in the flue gas resulting in the formation of gaseous or fine mist sulfuric acid (H₂SO₄).

Thus, in addition to SO₂, sulfuric acid gas and mist are also contained in the flue gas supplied to wet desulfurization device 7. As the temperature of the flue gas decreases to below the dew point temperature of sulfur acid when it passes through the wet desulfurization device, all of the sulfuric acid gas in the flue gas is transformed into sulfuric acid mist. Although SO₂ is removed with high efficiency in wet desulfurization device 7, as the removal rate of sulfuric acid mist by the wet desulfurization device is low, the concentration of sulfuric acid mist in the flue gas is normally relatively high at the outlet of wet desulfurization device 7.

Fig. 6(B) shows the temperatures of the flue gas and the concentrations of SO₂ and SO₃ in the flue gas at the locations indicated with Roman numerals I through III in Fig. 6(A). Furthermore, in Fig. 6(B), the total concentration of SO₃ in the flue gas and H₂SO₄ gas and mist is shown as the concentration of SO₃.

As shown in Fig. 6(B), at the outlet of air preheater 5 (II) (namely the inlet of wet desulfurization device 7), the concentration of SO₃ in the flue gas is about 60 ppm, while the SO₂ concentration is much higher at about 2000 ppm.

At the outlet of wet desulfurization device 7 (III), although the majority of the SO₂ is removed by the desulfurization device and the SO₂ concentration decreases to about 40 ppm, the SO₃ concentration does not decrease that much, and remains at a relatively high level of about 48 ppm in the example of Fig. 6.

In this manner, when flue gas containing a comparatively high concentration of sulfuric acid mist is released directly into the atmosphere from stack 11, the fine sulfuric acid mist forms blue smoke at the stack outlet, resulting in the occurrence of a so-called "trail of blue smoke" phenomenon. In addition, when sulfuric acid mist is released into the atmosphere, there is the problem of it being transformed into acid rain that falls on the surrounding area.

Next, an explanation is provided of the case of adding only a sodium carbonate supply device 20 of the present invention to the device of Fig. 6(A).

A sodium carbonate supply device 20 forms Na₂CO₃ particles in the flue gas by injecting fine powder of sodium hydrogen carbonate (sodium bicarbonate, NaHCO₃) into the flue gas on the downstream side of air preheater 5 of flue 3.

For example, when sodium hydrogen carbonate powder having a particle diameter of about 20 microns or less is injected into the flue gas by the sodium carbonate supply device 20, the sodium hydrogen carbonate undergoes a decomposition reaction at a relatively low flue gas temperature (e.g., about 60°C or higher) that follows the reaction formula of 2NaHCO₃ → Na₂CO₃ + CO₂ + H₂O followed by the release of gaseous CO₂ and H₂O and the formation of sodium carbonate (Na₂CO₃). Since those portions of the resulting sodium carbonate from which gas was released remain as voids, although there is hardly any change in particle size from the sodium hydrogen carbonate powder, the resulting particles are porous particles having high porosity.

In this manner, when Na₂CO₃ comprised of porous particles having high porosity are formed in the flue gas, the gaseous SO₃ fraction in the flue gas (SO₃ and gaseous H₂SO₄) is adsorbed inside the pores of the particles and reacts with the Na₂CO₃, resulting in the formation of Na₂SO₄ (sodium sulfate) by going through the reaction of:

Na₂CO₃ + SO₃ → Na₂SO₄ + CO₂

or

Na₂CO₃ + H₂SO₄ → Na₂SO₄ + CO₂ + H₂O

Since this Na₂SO₄ is in the form of particles maintained at nearly the same particle size as the Na₂CO₃, they are easily captured by desulfurization device 7 in the same manner as unreacted Na₂CO₃ particles. In addition, as both Na₂CO₃ and Na₂SO₄ are water-soluble, they can be easily discharged outside the system without forming scale in the desulfurization device. In addition, the small amount of NaHSO₄ simultaneously formed as a byproduct is also water-soluble.

Fig. 7(A) shows the device configuration in the case of adding the sodium carbonate supply device indicated with reference numeral 20 to the device of Fig. 6(A), while Fig. 7(B) shows the flue gas temperature and concentrations of SO₂ and SO₃ at the locations indicated with Roman numerals I through III in Fig. 7(A). As shown in Fig. 7(A), by supplying sodium hydrogen carbonate powder from sodium carbonate supply device 20 into the flue gas on the downstream side of air preheater 5, formation of Na₂CO₃ particles having a porous structure and removal of the SO₃ fraction in the flue gas by Na₂CO₃ are favorable. Furthermore, the configuration of sodium carbonate supply device 20 is described later.

In general, it is necessary to lower the SO₃ concentration in the flue gas at the inlet of stack 11 to about 2 ppm in order to prevent the generation of blue smoke from the stack. Thus, if the removal efficiency of SO₃ in wet desulfurization device 7 is taken to be equal to the case of Fig. 6, then it is necessary to lower the SO₃ concentration (in this case, the concentration of sulfuric acid mist) at the inlet of wet desulfurization device 7 (point II' in Fig. 7) to about 2.5 ppm.

Although varying according to the conditions, in order to accomplish this, the amount of NaHCO₃ to be supplied is the amount required to form an amount of Na₂CO₃ equal to about 1.5 to 5 equivalents of the amount of the SO₃ fraction in flue 3.

If this amount of NaHCO₃ is supplied to flue 3 from sodium carbonate supply device 20, the SO₃ concentration at the inlet of wet desulfurization device 7 is decreased to about 2.5 ppm, and the SO₃ concentration in the flue gas discharged from stack 11 can be lowered to about 2 ppm.

However, as the price of NaHCO₃ fine powder is comparatively high, constantly supplying such a large amount of NaHCO₃ fine powder to the flue gas while the plant is operating leads to an increase in the operating cost of the plant.

The present invention lowers plant operating costs by decreasing the amount of NaHCO₃ consumed by removing a considerable portion of the SO₃ in the flue gas on the upstream side of wet desulfurization device 7 using an SO₃ fraction removal device to be described later while avoiding lowering SO₃ concentration in the flue gas to the required concentration simply by supplying NaHCO₃ from sodium carbonate supply device 20.

Fig. 1 consists of drawings similar to Figs. 6 and 7 that show the configuration of one embodiment of the present invention, and the same reference symbols are used to indicate the same elements as those used in Figs. 6 and 7.

As shown in Fig. 1(A), the present embodiment differs from the case of Fig. 7 with respect to providing an SO₃ separation device 10 in the flue between air preheater 5 and wet desulfurization device 7 in addition to sodium carbonate supply device 20 of Fig. 7(A).

Although a description of the structure of the SO₃ separation device 10 of the present embodiment is provided later, the SO₃ separation device 10 condenses SO₃ in the flue gas in the form of liquid H₂SO₄ by cooling the flue gas until its temperature drops to below the dew point temperature of H₂SO₄ gas using a heat exchanger. As the temperature of the flue gas lowers due to contact with the heat conducting surface of the heat exchanger, condensation (dewing) of H₂SO₄ first occurs on the heat conducting surface, and most of the condensed liquid H₂SO₄ adheres to the heat conducting surface. Consequently, by washing off the H₂SO₄ adhered to the heat conducting surface with water to remove in the form of wastewater, the SO₃ in the flue gas is separated and removed.

Fig. 1(B) shows the flue gas temperatures and concentrations of SO₂ and SO₃ at each of the locations shown in Fig. 1(A). As shown in Fig. 1(B), in the present embodiment, although the temperatures of the flue gas and concentrations of SO₂ are the same as in Figs. 6 and 7 at the inlet of SO₃ separation device 10 (point II'), the SO₃ concentration is quite low at about 4 ppm in comparison with the case of Fig. 7. In addition, the flue gas temperature decreases from 160°C to 100°C at the outlet of SO₃ separation device 10 (point II"). As the dew point of H₂SO₄ is about 110°C, nearly all of the SO₃ present in the flue gas within SO₃ separation device 10 condenses in the form of liquid H₂SO₄. In addition, as this condensation occurs on the heat conducting surface of the heat exchanger within SO₃ separation device 10, the majority of the condensed H₂SO₄ adheres to the heat conducting surface, and is separated and removed from the flue gas.

Consequently, the SO₃ concentration at the outlet of the SO₃ separation device decreases from 4 ppm at the inlet to 2.5 ppm.

As a result, at the outlet of wet desulfurization device 7, SO₃ concentration becomes 2 ppm, and SO₃ concentration can be maintained at the same level as the case of Fig. 7.

When compared with the case of Fig. 7, the residual SO₃ concentration in the flue gas after supplying NaHCO₃ from sodium carbonate supply device 20 (point II' in Fig. 1) in the present embodiment increases from 2.5 ppm to 4 ppm. In general, as the concentration of residual SO₃ becomes lower, it becomes more difficult to decrease SO₃ concentration further even if the amount of NaHCO₃ supplied is increased, and the amount of NaHCO₃ required to lower SO₃ concentration by 1 ppm increases as the residual SO₃ concentration lowers. Consequently, if the allowable residual concentration of SO₃ after supplying NaHCO₃ increases from 2.5 ppm to 4 ppm, the required amount of NaHCO₃ that is supplied is reduced by about 30%.

Namely, in the present embodiment, the amount of NaHCO₃ consumed can be reduced considerably by providing the SO₃ separation device 10.

Furthermore, although air heater 5 that preheats the combustion air by causing an exchange of heat between the flue gas and boiler combustion air is provided on the upstream side of the SO₃ separation device in the example of Fig. 1, a gas/gas heater may be provided in addition to air heater 5 which prevents the generation of white smoke caused by steam in the stack by heating flue gas discharged from the stack to cause an exchange of heat between the flue gas at the outlet of wet EP 8 (or inlet of stack 11) and flue gas on the upstream side of the SO₃ separation device.

Next, an explanation is provided of the configuration of the SO₃ separation device 10 of the present embodiment using Fig. 2.

The SO₃ separation device of the present embodiment is provided with a shell-and-tube type of heat exchanger 100, which is composed of a casing 10a through which flue gas passes from the top to the bottom, and tubes 10b arranged at a right angle to the flow of flue gas within casing 10a and through which cooling water passes therein, and a washing device 101 arranged above the group of tubes 10b.

Washing device 101 is arranged, for example, in parallel with tubes 10b, and is provided with header pipe 101a by which industrial water is supplied, a plurality of branching pipes 101b(five in the example of Fig. 2) that extend from the headers in parallel with the upper sections of the group of tubes 10b, nozzles 101c that spray water from each branching pipe towards the group of tubes 10b, and switching valves 101d provided on each branching pipe that control the supply of water from header pipe 101a to each branching pipe 101b.

In the present embodiment, a total of 10 nozzles 101c are provided, consisting of two nozzles for each branching pipe 101b, and each nozzle sprays water within the range indicated with circles centering around each nozzle in Fig. 2. The spraying circle 101e from each nozzle adequately overlaps with adjacent spraying circles, enabling the outer peripheries of all tubes 10b of heat exchanger 100 to be washed by the 10 nozzles.

In the SO₃ separation device 10 of Fig. 2, flue gas that flows in from the top of casing 10a contacts tubes 10b inside casing 10a, and SO₃ fraction present in the flue gas condenses in the form of liquid H₂SO₄ and adheres to the outer periphery of tubes 10b that are at a low temperature. The amount of H₂SO₄ adhered to the outer periphery of tubes 10b increases with time and, although it forms scale together with soot and dust in the flue gas, in the present embodiment, by periodically washing the outer periphery of the tubes with water from washing device 101, in addition to preventing a decrease in the efficiency of heat exchange between the tubes caused by accumulation of scale on the outer periphery of tubes 10b, the condensed H₂SO₄ is separated and removed from the flue gas.

Washing of tubes 10b is carried out, for example, by sequentially opening switching valves 101d of each branching pipe 101c for a predetermined duration each while flue gas is passing through to spray water from nozzles 101c. As a result, washing of tubes 10b is carried out on one-fifth the total surface area at a time by spraying of water from two nozzles 101c during each washing. In the present embodiment, for example, as water spraying of about 2 minutes duration is repeated each time by changing the branching pipe at 1 hour intervals, washing of the entire surface of tubes 10b is repeated while containing separation of SO₃ in cycles of 5 hours and 10 minutes.

Furthermore, a highly corrosive environment results because H₂SO₄ mist contacts the surface of tubes 10b and the inner surface of casing 10a. Consequently, in the present embodiment, all of the surfaces of tubes 10b and inner surface of casing 10a are coated with polytetrafluoroethylene (PTFE) or copolymer of tetrafluoroethylen and perfluoro (alkyl vinyl ether) degree of chemical resistance to prevent corrosion of the tubes and casing. In this manner, corrosion of the heat exchanger 10 is nearly completely prevented by combining the use of PFTE coating or PFA coating and water washing. Furthermore, casing 10a and tubes 10b may also be composed with a corrosion-resistant material such as stainless steel having a high degree of chemical resistance.

Moreover, in the present embodiment, boiler supply water is used for the cooling water supplied to tubes 10b. As shown in Fig. 1(B), as the temperature drop of the flue gas is comparatively large in heat exchanger 100 of SO₃ separation device 10, by using this waste heat to heat the boiler supply water with heat exchanger 100, the amount of fuel consumed by the boiler can be reduced considerably. In addition, the generation of white smoke at the stack outlet can also be prevented by heating the flue gas at the stack inlet using cooling water after cooling the flue gas with heat exchanger 100. (In this case, the heat exchanger is installed between the flue gas at the stack inlet and the cooling water (hot water).)

Namely, in the present embodiment, by providing SO₃ separation device 10 as shown in Fig. 1, SO₃ present in the flue gas can be removed while considerably reducing the amount of NaHCO₃ supplied from sodium carbonate supply device 20. Although it therefore becomes possible to reduce boiler operating costs by using inexpensive heavy fuel having a comparatively high sulfur content (e.g., 2% or more), by additionally using the heat exchanger 100 of the SO₃ separation device 10 as an economizer that heats the boiler supply water, the amount of fuel consumption can be further reduced.

Next, an explanation is provided of the treatment of wastewater used for washing the surfaces of tubes 10b with washing device 101 of the SO₃ separation device 10. Wastewater following washing of the surfaces of tubes 10b contains sulfuric acid that was adhered to the tubes. Consequently, wastewater following washing cannot be released directly, but rather requires treatment to neutralize the sulfuric acid.

In the present embodiment, as a result of supplying wastewater following washing of tubes 10b to the absorption tower of wet desulfurization device 7, in addition to neutralizing the washing wastewater without having to provide separate wastewater treatment equipment, by using it to replenish the aqueous SO₂ absorbent solution of the absorption tower, the amount of water consumed by wet desulfurization device 7 can be reduced.

Fig. 3 is a drawing schematically showing the arrangement of an SO₃ separation device in the case of using the washing wastewater of SO₃ separation device 10 to replenish an absorption tower.

In Fig. 3, reference symbol 71 indicates an absorption tower of wet desulfurization device 7, reference symbol 75 indicates an SO₂ absorbent (such as an aqueous calcium hydroxide solution or other aqueous SO₂ absorbent solution) pump, and reference symbol 73 indicates a cooling tower arranged upstream from absorption tower 71. Cooling tower 73 improves the absorption efficiency of SO₂ by lowering the temperature of the flue gas flowing into absorption tower 71. Inside cooling tower 73, the flue gas enters the cooling tower from an inlet provided in the upper section of the cooling tower, flows downward through the tower, and then flows into absorption tower 71 from flue gas passage 77 provided in the lower section of cooling tower 73.

Inside cooling tower 73, industrial water supplied from the outside is sprayed into the flue gas from cooling nozzles 73a, and a portion of that water evaporates to lower the temperature of the flue gas. Water sprayed from cooling nozzles 73a temporarily collects in water tank 73b in the bottom of cooling tower 73, overflows from flue gas passage 77 due to a rise in the water level, and then flows into circulation water tank 71b of the aqueous absorbent solution of the absorption tower. An aqueous absorbent solution present within circulation water tank 71b is sprayed into the flue gas from nozzles 71a in the upper section of the absorption tower by circulation pump 75, the sprayed absorbent contacts the flue gas flowing upward through absorbent tower 71, and is then recovered in circulation water tank 71b in the form of, for example, CaSO₄, due to absorption of SO₂ in the flue gas.

Flue gas from which SO₂ has been removed by absorbent flows out of the upper section of absorption tower 71 into a flue.

As shown in Fig. 3, in the present embodiment, the SO₃ separation device 10 is arranged at the flue gas inlet of the upper section of cooling tower 73. Consequently, wastewater that contains H₂SO₄ following washing of the tubes of SO₃ separation device 10 descends through cooling tower 73, enters water tank 73b of the lower section, and then overflows from water tank 73b after which it is supplied to circulation water tank 71b of absorption tower 71. As a result, the H₂SO₄ present in the washing wastewater reacts with SO₂ absorbent (such as aqueous calcium hydroxide solution) causing it to be neutralized while also reducing the amount of water replenished to circulation water tank 71b.

Moreover, in the present embodiment, the temperature of the flue gas that flows into cooling tower 73 is lowered considerably as a result of having passed through SO₃ separation device 10 (see Fig. 1(B)). Consequently, the amount of water that evaporates during cooling of the flue gas within cooling tower 71 decreases, thereby resulting in a corresponding reduction in the amount of water consumed in the cooling tower. Thus, in the present embodiment, in addition to the reduction in the replenishing water as mentioned above, the amount of industrial water consumed in wet desulfurization device 7 can also be reduced considerably.

Furthermore, as shown in Fig. 4, in the case of a configuration in which flue gas is cooled by providing cooling nozzles 73a and spraying water in flue gas passage 77 at the inlet of absorption tower 71 instead of providing an independent cooling tower, the effect of reducing industrial water can be obtained in the same manner as the case of Fig. 3 by arranging SO₃ separation device 10 in the upper section of flue gas passage 77.

Next, an explanation is provided of the configuration of sodium carbonate supply device 20 of the present embodiment with reference to Fig. 5.

In Fig. 5, reference symbol 201 indicates a silo that stores sodium hydrogen carbonate power, and reference symbol 210 indicates NaHCO₃ Powder stored within silo 201. A known type of powder quantity measuring and supply device 206 is provided at the outlet section of silo 201, and NaHCO₃ powder within silo 201 is supplied to transport pipe 208 at constant flow rate. Transport pipe 208 is connected to spray nozzle 315 provided in flue 3, and NaHCO₃ powder is sprayed into flue 3 by carrier air supplied from a carrier air blower 207. Furthermore, nozzle 315 sprays NaHCO₃ in the direction opposite to the flow of flue gas in flue 3 (arrow A in Fig. 5). As a result, the sprayed NaHCO₃ powder is mixed uniformly into the flue gas in the flue.

Fluidizing air is supplied to silo 201 so as to increase the fluidity of the NaHCO₃ powder inside the silo and ensure a uniform supplied amount of NaHCO₃ powder from the quantity measuring and supply device. Fluidizing air is injected into NaHCO₃ powder 210 from a large number of holes in a diffuser plate 203 provided in the wall of the lower section of silo 201. As a result, NaHCO₃ powder within silo 201 flows into the quantity measuring and supply device 206 while flowing smoothly and without forming clumps. After passing through the NaHCO₃ powder, the fluidizing air is released to the outside by passing through bag filter 209 provided in the upper section of silo 201. The amount of NaHCO₃ powder supplied to the flue (flow volume) can be adjusted by changing the operating rate of quantity measuring and supply device 206.

The SO₃ separation device 10 of the present embodiment can be installed on the wet desulfurization device as shown in Figs. 3 and 4 regardless of the type of wet desulfurization device. In addition, the sodium carbonate supply device 20 of the present embodiment can be easily connected to flue 3 via nozzle 315 as shown in Fig. 5. Consequently, even in an existing glue gas treatment system in which, for example, flue gas treatment is performed using only a desulfurization device as shown in Fig. 6, the existing wet desulfurization device can be used without modification, and the SO₃ separation device 10 and sodium carbonate supply device 20 can be additionally installed using a simple modification procedure. Consequently, if a method is used for fabricating the SO₃ separation device of the present invention by modification work using an existing wet desulfurization device, an SO₃ fraction removal device can be composed extremely inexpensively.

Furthermore, although the explanation in the above-mentioned embodiment used as an example the case of not installing a wet EP at the outlet of the wet desulfurization device, it goes without saying that if a wet EP is additionally installed at the outlet of wet desulfurization device 7 using the configuration of Fig. 1, the amount of NaHCO₃ consumed can be further reduced. In addition, instead of a wet EP, an electrostatic precipitator can also be used of the type that charges particles of sulfuric acid mist and so forth in the flue gas, sprays a dielectric substance such as water onto the charged particles and applies a direct current electric field to the sprayed dielectric substance to dielectrically polarize the dielectric substance and capture fine particles of charged sulfuric acid mist and so forth on the dielectric substance having a comparatively large particle size. In the case of such an electrostatic precipitator, as a result of sub-micron size particles of sulfuric acid mist being captured by comparatively large particles of the dielectric substance and causing them to be collected together with the dielectric particles, the collection efficiency of sub-micron particles can be improved considerably, thereby making it possible reduce the size of the device while maintaining the same SO₃ removal efficiency as a wet EP.

Furthermore, although NaHSO₄ (acidic sodium sulfate) is formed in the above-mentioned embodiment as a result of a portion of the NaHSO₃ formed by the reaction of sodium carbonate supplied to the flue gas and SO₃ further reacting with the SO₃ fraction in the exhaust, as this NaHSO₄ is extremely hygroscopic, it adheres to moving parts when equipment having moving parts such as blowers or dampers are present, and may cause problems such as sticking. Consequently, it is preferable to prevent the occurrence of problems such as sticking by not arranging equipment having moving parts such as blowers or dampers in the flue gas passage between the sodium carbonate supply device and wet desulfurization device.

In addition, in the case of providing a sodium carbonate removal device such as an electrostatic precipitator capable of removing the reaction product of sodium carbonate and SO₃ between the sodium carbonate supply device and wet desulfurization device, sticking and other problems do not occur even if equipment having moving parts are arranged in the flue gas passage on the downstream side of the sodium carbonate removal device. However, in this case as well, it is preferable to prevent the occurrence of problems such as sticking by not arranging equipment having moving parts such as blowers and dampers in the flue gas passage between the sodium carbonate supply device and sodium carbonate removal device.

According to the present invention as described above, the effect is demonstrated that enables SO₃ present in flue gas to be removed without leading to increased plant operating costs.

Moreover, according to the present invention, in addition to the above effect, as it is possible to easily compose an SO₃ fraction removal device by modifying a flue gas treatment system having an existing wet desulfurization device, the additional effect is demonstrated of being able to further reduce device costs.

## Claims

1. A flue gas SO₃ fraction removal device comprising: a flue gas passage that leads flue gas from a furnace in which fuel containing a sulfur fraction is burned to a stack,
a wet desulfurization device arranged in the flue gas passage that removes sulfur dioxide (SO₂) present in the flue gas,
a sodium carbonate supply device that supplies sodium carbonate (Na₂CO₃) to the flue gas passage on the upstream side of the desulfurization device, and
an SO₃ separation device, arranged on the upstream side of the wet desulfurization device and on the downstream side of the flue gas passage to which the sodium carbonate is supplied, that condenses the SO₃ fraction present in the flue gas in the form of liquid H₂SO₄ by cooling the flue gas to separate and remove it from the flue gas.

2. The flue gas SO₃ fraction removal device, according to claim 1, wherein the sodium carbonate supply device supplies sodium hydrogen carbonate powder (NaHCO₃) to the flue gas of the flue gas passage on the upstream side and converts sodium hydrogen carbonate present in the flue gas to porous sodium carbonate fine particles.

3. The flue gas SO₃ fraction removal device, according to either claim 1 or claim 2, wherein the SO₃ separation device is provided with a heat exchanger that cools the flue gas by exchanging heat between cooling water and the flue gas via a heat conducting surface, and a washing device that washes with water liquid H₂SO₄ that condenses on the surface of the heat conducting surface on the flue gas side while the flue gas passes through.

4. The flue gas SO₃ fraction removal device, according to claim 3, wherein the wet desulfurization device is provided with an absorption tower through which flue gas passes, and an absorbent circulation device that sprays an aqueous SO₂ absorbent solution into the absorption tower and collects SO₂ present in the flue gas by absorbing it into the aqueous solution, the washing device supplying wastewater containing H₂SO₄ following washing of the heat conducting surface as replenishing water for replenishing the absorbent circulation device.

5. The flue gas SO₃ fraction removal device, according to claim 4, wherein the heat exchanger is a shell and tube type of heat exchanger provided with a casing through which flue gas passes within and tubes arranged within said casing through which cooling water passes within, the inner surface of the casing and the outer surfaces of the tubes being composed with a corrosion-resistant material or coated with a corrosion-resistant material.

6. The flue gas SO₃ fraction removal device, according to either claim 4 or claim 5, wherein the wet desulfurization device is additionally provided with a cooling tower that lowers the temperature of flue gas that enters the absorption tower by spraying water into the flue gas, the SO₃ separation device is arranged at the flue gas inlet section of the upper section of the cooling tower, and the washing device supplies wastewater after washing the heat conducting surface to the inside of the cooling tower to replenish water sprayed into the cooling tower and to the absorbent circulation device of the absorption tower as replenishing water.

7. The flue gas SO₃ fraction removal device according to any of claims 3 through 6, wherein boiler supply water is used as cooling water of the heat exchanger, and heat of the flue gas is recovered in the boiler supply water.

8. The flue gas SO₃ fraction removal device according to claim 2, wherein a gas/gas heater is provided in the flue gas passage on the upstream side of the SO₃ separation device that allows exchange of heat between flue gas supplied to the stack and flue gas discharged from the furnace, and the sodium carbonate supply device supplies sodium hydrogen carbonate powder to the flue gas passage on the downstream side of an air preheater.

9. A production method of a flue gas SO₃ fraction removal device that composes a flue gas SO₃ fraction removal device by respectively additionally installing the SO₃ separation device and sodium carbonate supply device according to any of claims 1 through 8 in the flue gas passage on the upstream side of an existing wet desulfurization device.

10. The SO₃ fraction removal device, according to claim 1, wherein equipment arranged in the flue gas passage between the sodium carbonate supply device and the wet desulfurization device are composed only of equipment not having moving parts at sections in contact with the flue gas.

11. The SO₃ fraction removal device, according to claim 1, wherein a sodium carbonate removal device is provided between the sodium carbonate supply device and the wet desulfurization device that removes sodium carbonate after reacting with SO₃ fraction present in the flue gas, and equipment arranged in the flue gas passage between the sodium carbonate supply device and the sodium carbonate removal device are composed only of equipment not having moving parts at sections in contact with the flue gas.
